# EUROPÄISCHE PATENTSCHRIFT

(11) **EP 1 043 524 B1**
(45) Veröffentlichungstag und Bekanntmachung des Hinweises auf die Patenterteilung: **11.09.2002**
(21) Anmeldenummer: 00107638.9
(22) Anmeldetag: 08.04.2000
(51) Int. Cl.: F16J 15/08

(54) **Flachdichtung**
Flat gasket
Joint plat

(30) Priorität: 09.04.1999 DE 19916058
(43) Veröffentlichungstag der Anmeldung: 11.10.2000
(73) Patentinhaber: ElringKlinger AG, 72581 Dettingen (DE)
(72) Erfinder: Becker, Theo, 65510 Idstein (DE); Böhm, Klaus, 65510 Idstein (DE); Opitz, Stefan, 65510 Hünstetten (DE); Zentgraf, Roland, 63879 Weibersbrunn (DE); Koch, Siegbert, 56170 Bendorf (DE)
(74) Vertreter: Hoeger, Stellrecht & Partner

(56) Entgegenhaltungen:
- EP-A- 0 695 895
- GB-A- 1 431 183
- GB-A- 2 097 870

## Beschreibung

Die Erfindung betrifft eine zwischen zwei Bauteilen einzuspannende Flachdichtung mit einer mehrlagigen Dichtungsplatte, welche zwischen metallischen Außenlagen mindestens eine Zwischenlage sowie an ihren beiden Hauptoberflächen Abdichtflächenbereiche zum abdichtenden Anliegen gegen die Bauteile aufweist, wobei mindestens die Außenlagen durch Vernieten mittels wenigstens eines Niets aneinander fixiert sind.

Insbesondere betrifft die Erfindung eine solche Flachdichtung in Gestalt einer Zylinderkopfdichtung, weshalb die Erfindung im folgenden im wesentlichen anhand von Zylinderkopfdichtungen diskutiert wird, welche zwischen einem Motorblock und einem Zylinderkopf als Bauteile eingebaut und eingespannt werden. Eine derartige Flachdichtung ist aus dem Dokument GB-A-2 097 870 bekannt.

Werden bei herkömmlichen, mindestens im wesentlichen metallischen Flachdichtungen mit mehrlagiger Dichtungsplatte mehrere oder alle Lagen der Dichtungsplatte durch Vernieten aneinander fixiert, ergibt sich folgende Problematik: Die beiden Hauptoberflächen einer Flachdichtung sind im allgemeinen zumindest im wesentlichen eben und zueinander parallel, sieht man einmal davon ab, daß diese Hauptoberflächen partiell mit meist elastomeren Dichtungsmaterialien beschichtet sein können und/oder daß um jeweils eine Durchgangsöffnung der Dichtungsplatte umlaufende Bördeleinfassungen auf einer oder beiden Seiten der Dichtungsplatte über deren Hauptoberflächen überstehen, wodurch die spezifische Flächenpressung zwischen Dichtung und zwei gegeneinander abzudichtenden Maschinenbauteilen um die betreffende Durchgangsöffnung herum erhöht wird. Sofern bei bekannten Flachdichtungen die Lagen der Dichtungsplatte miteinander vernietet wurden, gestaltete man die Dichtungsplatte so, daß sie mit einem oder mehreren Bereichen seitlich über die beiden Maschinenbauteile übersteht, um in diesen Bereichen die Nieten anzubringen, so daß diese nicht zwischen den beiden Maschinenbauteilen eingespannt werden, da sonst die über die Hauptoberflächen der Dichtungsplatte überstehenden Nieten zu nicht akzeptablen Verformungen der Dichtflächen der Maschinenbauteile und zu einer mangelhaften Abdichtung führen würden. Die zunehmend enger werdenden Platzverhältnisse im modernen Motorenbau lassen es aber immer weniger zu, daß Flachdichtungsbereiche über die gegeneinander abzudichtenden Motorbauteile überstehen.

Nun wäre es auch denkbar, in den Dichtflächen der Maschinenbauteile Aussparungen vorzusehen, um die überstehenden Bereiche der Nieten aufzunehmen, oder z. B. bei Zylinderkopfdichtungen die Nieten an solchen Stellen der Dichtung anzubringen, welche an ohnehin vorhandene Aussparungen oder Öffnungen in Zylinderkopf und Motorblock angrenzen, wie dies z. B. bei solchen Stellen von Zylinderkopfdichtungen der Fall ist, welche frei im Kühlmittel des betreffenden Motors liegen; dann würde man aber starken Einschränkungen unterworfen sein hinsichtlich der Lage der Nieten in der Dichtung.

Zur Beseitigung der vorstehend erwähnten Probleme sieht die vorliegende Erfindung vor, in den Hauptoberflächen der Dichtungsplatte Vertiefungen vorzusehen, um die über die Außenseiten der Außenlagen der Dichtungsplatte überstehenden Nietbereiche aufzunehmen, so daß diese auch dann nicht stören, wenn bei eingebauter Dichtung die Nieten zwischen den Dichtflächen der gegeneinander abzudichtenden Maschinenbauteile liegen. Grundgedanke der Erfindung ist es also, es durch das "Versenken" der Nieten in der Flachdichtung zu ermöglichen, die Nieten dort zu positionieren, wo die Flachdichtung mit ihrer einen Seite oder beiden Seiten unter Pressung gegen das eine oder beide gegeneinander abzudichtende Maschinenbauteile anliegt.

Insbesondere wird eine Flachdichtung der eingangs erwähnten Art erfindungsgemäß so gestaltet, daß der Niet in einem Bereich der Dichtungsplatte angeordnet ist, in dem die Außenseiten der Außenlagen einen um so viel geringeren Abstand voneinander aufweisen als in diesem Bereich benachbarten, Abdichtflächenbereiche bildenden Nachbarbereichen der Dichtungsplatte, daß der Niet nicht über das Niveau der Abdichtflächenbereiche dieser Nachbarbereiche übersteht.

Dieses Konzept der vorliegenden Erfindung läßt sich beispielsweise dadurch verwirklichen, daß eine der Außenlagen oder beide Außenlagen vor dem Zusammensetzen der Dichtungsplatte örtlich beispielsweise durch Prägen so verformt wird bzw. werden, daß in dem den Niet aufnehmenden Dichtungsplattenbereich die Außenseiten der beiden Außenlagen einander näher liegen als in den Nachbarbereichen; zu diesem Ergebnis führt es aber auch, wenn die Stärke bzw. Dicke einer oder mehrerer Zwischenlagen der Dichtungsplatte vor dem Zusammenbau der letzteren beispielsweise durch Prägen örtlich vermindert wird, da sich dann im Zuge des Vernietens die beiden Außenlagen örtlich einander annähern lassen. Noch einfacher läßt sich die Erfindung verwirklichen, wenn die Zwischenlage oder mindestens eine der Zwischenlagen in dem den Niet aufnehmenden Dichtungsplattenbereich eine eine örtliche Annäherung der Außenlagen aneinander ermöglichende Aussparung in Form eines öffnungsartigen Ausschnitts aufweist, da sich ein solcher Ausschnitt auf einfachste Weise schon beim Ausstanzen der Zwischenlage erzeugen läßt. In manchen Fällen könnte es aber auch möglich sein, statt einer einstückigen (gegebenenfalls auch mehrlagigen) Zwischenlage mit einem öffnungsartigen Ausschnitt eine - in der Draufsicht mehrteilige - Zwischenlage vorzusehen, wobei die Teile der Zwischenlage zwischen sich einen freien Bereich bilden, welcher eine örtliche Annäherung der Außenlagen aneinander ermöglicht.

Bei bevorzugten Ausführungsformen der erfindungsgemäßen Flachdichtung liegen in dem den Niet aufnehmenden Bereich der Dichtungsplatten deren Außenlagen gegeneinander an, und zwar schon bei noch nicht eingebauter Dichtung aufgrund des Vernietens der Außenlagen miteinander.

Besonders empfehlenswert ist es, den Niet als insbesondere ösenartigen Hohlniet auszubilden; er könnte dann beispielsweise in einer Zylinderkopfdichtung auch die Funktion einer Drossel übernehmen, welche im Kühlmittelkreislauf des Motors liegt, d. h. zwischen größeren Kühlmittel-Durchgangsöffnungen im Motorblock und Zylinderkopf. Die Erfindung bezieht sich jedoch hauptsächlich auf Ausführungsformen, bei denen der Niet im Bereich durchgehender, öffnungs- und vertiefungsloser Abschnitte der Dichtflächen der beiden gegeneinander abzudichtenden Maschinenbauteile liegt, welche den Niet ringsum umgeben; der Niet ist dann beispielsweise auch nicht einem aggresiven Medium, wie dem Frostschutzmittel des Kühlwassers, ausgesetzt.

Vor allem dann, wenn es sich bei dem Niet um einen Hohlniet handelt, so daß die beiden Seiten der Dichtung über die vom Hohlniet gebildete Öffnung miteinander in Verbindung stehen, kann es sich empfehlen, die Außenlagen in den genannten Nachbarbereichen wenigstens an einer Hauptoberfläche der Dichtungsplatte mit mindestens einem Dichtelement zu versehen, welches den den Niet aufnehmenden Dichtungsplattenbereich umschließt. Bei diesem Dichtelement kann es sich z. B. um eine auf die betreffende Hauptoberfläche der Dichtungsplatte aufgetragene Dichtraupe aus einem elastomeren Material handeln, aus Gründen der Dauerhaftigkeit und Temperaturunempfindlichkeit werden jedoch Ausführungsformen bevorzugt, bei denen das Dichtelement als in der betreffenden Außenlage ausgebildete Sicke gestaltet ist, und natürlich dürfte es sich in der Regel empfehlen, die Außenlagen an jeder der beiden Hauptoberflächen der Dichtungsplatte mit mindestens einem z. B. als Sicke gestalteten Dichtelement zu versehen. Die Sicke kann, wie dies bei sogenannten Vollsicken üblich ist, einen ungefähr U-förmigen Querschnitt haben, bevorzugt werden jedoch Sicken in Gestalt von sogenannten Halbsicken, welche eine im Querschnitt ungefähr stufenförmige Gestalt haben - die Stufe fällt dann in Richtung auf den Niet ab und führt schon dadurch zu einer Annäherung der Außenseiten der beiden Außenlagen.

Bevorzugt werden Ausführungsformen der erfindungsgemäßen Flachdichtung, bei denen beide Außenlagen aus Federstahlblech bestehen, insbesondere aus rostfreiem Federstahlblech, was es auch ermöglicht, Rückfederungseigenschaften aufweisende Dichtelemente in Form von Sicken vorzusehen.

Die zwischen den metallischen Außenlagen befindliche Zwischenlage bzw. Zwischenlagen könnten grundsätzlich (ebenso wie im übrigen auch die Außenlagen) aus einem nicht-metallischen Werkstoff bestehen; bei bevorzugten Ausführungsformen der erfindungsgemäßen Flachdichtung werden aber alle Lagen der Dichtungsplatte von Metallagen gebildet.

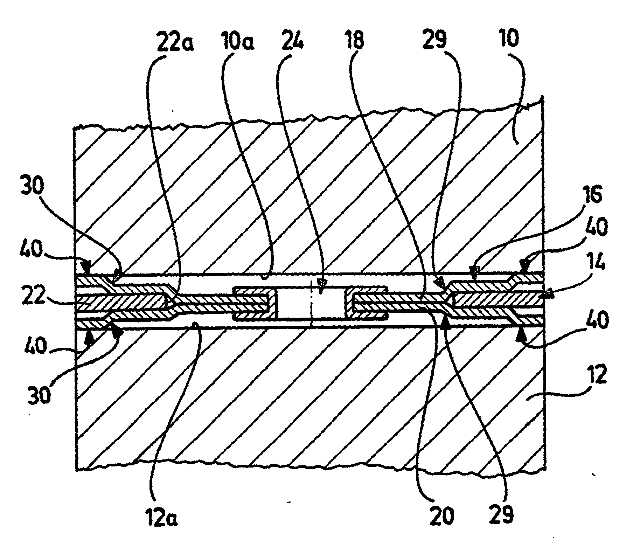

Weitere Merkmale, Vorteile und Einzelheiten der Erfindung ergeben sich aus der beigefügten zeichnerischen Darstellung sowie der nachfolgenden Beschreibung einer besonders vorteilhaften Ausführungsform der erfindungsgemäßen Flachdichtung; die Zeichnung zeigt einen Schnitt durch zwei gegeneinander abzudichtende Maschinenbauteile sowie durch einen Bereich dieser Flachdichtung, welche zwischen diesen beiden Maschinenbauteilen eingespannt ist.

Bei den beiden Maschinenbauteilen soll es sich um einen Zylinderkopf 10 und einen Motorblock 12 handeln, deren beide gegeneinander abzudichtende Dichtflächen mit 10a bzw. 12a bezeichnet wurden. Zwischen diesen beiden Dichtflächen liegt eine als Ganzes mit 14 bezeichnete erfindungsgemäße Zylinderkopfdichtung, welche in üblicher Weise mittels nicht dargestellter Zylinderkopfschrauben zwischen den beiden Dichtflächen einspannt wurde.

Die Zylinderkopfdichtung 14 besitzt eine Dichtungsplatte 16, die aufgebaut ist aus zwei Außenlagen 18 und 20 sowie einer Zwischenlage 22.

Erfindungsgemäß sollen die beiden Außenlagen 18, 20 an mehreren, zwischen den Dichtflächen 10a und 12a liegenden Stellen der Dichtungsplatte 16 fest miteinander verbunden sein, und zwar mittels Nieten, von denen die Zeichnung nur den Niet 24 darstellt. Außerdem soll durch das feste Vernieten der beiden Außenlagen erreicht werden, daß auch die Zwischenlage 22 bezüglich der Außenlagen fixiert, insbesondere aber auch noch zentriert wird, indem sie zwischen den beiden Außenlagen eingespannt wird, und zwar schon in der noch nicht zwischen die beiden Maschinenbauteile eingebauten Dichtung.

Erfindungsgemäß hat nun die Zwischenlage 22 einen öffnungsartigen Ausschnitt 22a, in welchem der als Hohlniet gestaltete Niet 24 liegt und der es ermöglicht, im Zuge des Vernietens der beiden Außenlagen 18, 20 diese in dem Ausschnitt 22a einander anzunähern, bis sie fest gegeneinander gepreßt werden, so wie dies in der Zeichnung dargestellt ist. Der Annäherung der beiden Außenlagen im Zuge des Vernietens ist aber ein Formprägen der Außenlagen, insbesondere vor dem Zusammensetzen der Dichtungsplatte 16, vorzuziehen, um den Außenlagen 18, 20 um die spätere Nietstelle herum bereits ihre endgültige Gestalt zu verleihen; dies kann insbesondere durch einen kombinierten Stanz-Biege-Vorgang erfolgen, durch den in den Außenlagen auch die Löcher zum späteren Anbringen der Nieten hergestellt werden.

Durch die dargestellte Formgebung der beiden Außenlagen 18, 20 ergibt sich erfindungsgemäß in jeder Außenlage eine den Niet 24 vollständig aufnehmende Vertiefung und eine den Niet umschließende Stufe 29, sowie vorzugsweise auch eine den Niet 24 umschließende sogenannte Halbsicke 30; da radial außerhalb der Halbsicken 30 die Außenlagen 18, 20 über einen gewissen Bereich einen Abstand von der Zwischenlage 22 aufweisen, bilden die Halbsicken den Niet 24 umschließende Dichtelemente mit Rückfederungseigenschaften in Richtung senkrecht zu den Dichtflächen 10a und 12a, so daß die Halbsicken dergestalt abdichtend gegen die Dichtflächen 10a und 12a anliegen, daß durch die Halbsicken die in der Zeichnung dargestellten, im Bereich des Niets 24 und seiner unmittelbaren Umgebung bestehenden Hohlräume nach außen zu abgedichtet werden.

Die in der Zeichnung erkennbaren Abdichtflächenbereich der beiden Hauptoberflächen der Dichtung wurden mit 40 bezeichnet; mit diesen Abdichtflächenbereichen sowie den Sicken 30 liegt die Dichtung gegen die Dichtflächen 10a und 12a der beiden Maschinenbauteile, d. h. des Zylinderkopfs 10 und des Motorblocks 12, an.

Durch die Stufenhöhe der Sicken 30 sowie der Stufen 29 kann die Tiefe der "Versenkung" des Niets 24 bestimmt werden, wobei die Tiefe des Versenkens des Niets zur Mittelebene der Dichtungsplatte symmetrisch, aber auch asymmetrisch sein kann.

Aus der DE-38 00 467-A ist zwar schon eine Zylinderkopfdichtung bekannt, welche eine mehrlagige Dichtungsplatte mit metallischen Außenlagen aufweist, die durch Vernieten miteinander verbunden sind und von denen jede für jeden Niet mit einer muldenförmigen Einprägung versehen ist, welche den Niet umgibt, wobei die "Böden" der beiden Einprägungen gegeneinander anliegen. Zum einen offenbart die DE-38 00 467-A jedoch nicht die Gedanken, die Einprägungen so zu gestalten, daß sie den Niet vollständig aufnehmen können, so daß er nicht über das Niveau der beiden Hauptoberflächen der Dichtungsplatte übersteht, und diejenigen Stellen, an denen die Außenlagen miteinander vernietet sind, so zu wählen, daß sie bei eingebauter Dichtung zwischen öffnungs- und vertiefungslosen Bereichen der Dichtflächen der gegeneinander abzudichtenden Maschinenbauteile liegen, sondern diese bekannte Zylinderkopfdichtung hat auch einen grundsätzlich anderen Aufbau: Zwischen den beiden Außenlagen ihrer Dichtungsplatte befindet sich ein plattenförmiges Halteteil eines eine Flüssigkeits-Durchgangsöffnung einfassenden, ringförmigen elastomeren Dichtelements, welches mit dem gleichfalls elastomeren plattenförmigen Halteteil einstückig ist, und die Brennraum-Durchgangsöffnungen der Dichtungsplatte werden jeweils von einem die betreffende Brennraumöffnung umfassenden, gesickten Metallring umgeben, der sich zwischen den beiden Außenlagen der Dichtungsplatte befindet, welche durch diese Metallringe in einem solchen Abstand voneinander gehalten werden sollen, daß auch bei eingebauter Zylinderkopfdichtung das plattenförmige Halteteil des elastomeren Dichtelements nicht zwischen den beiden Außenlagen der Dichtungsplatte gepreßt wird. Die plattenförmigen Halteteile der elastomeren Dichtelemente dieser bekannten Zylinderkopfdichtung werden dadurch an einer Verschiebung zwischen den beiden Außenlagen der Dichtungsplatte gehindert, daß die Halteteile kreisrunde Löcher aufweisen, in die die miteinander vernieteten Einprägungen der Außenlagen eingreifen. Schließlich sei noch erwähnt, daß die beiden Hauptoberflächen der Dichtungsplatte dieser bekannten Zylinderkopfdichtung außerhalb der miteinander vernieteten Einprägungen der beiden Außenlagen überall glatt und eben sind, weshalb die vorstehend beschriebenen elastomeren Dichtelemente erforderlich sind, um einen Durchtritt flüssiger Medien durch die Nietstellen hindurch zu verhindern.

## Patentansprüche

1. Zylinderkopfdichtung zum Einspannen zwischen Dichtflächen (10a, 12a) zweier Maschinenbauteile in Form eines Motorblocks (12) und eines Zylinderkopfs (10), wobei die Dichtflächen öffnungs- und vertiefungslose Bereiche besitzen und die Zylinderkopfdichtung eine mehrlagige Dichtungsplatte (16) aufweist, welche zwischen metallischen Außenlagen (18, 20) mindestens eine Zwischenlage (22) sowie an ihren beiden Hauptoberflächen Abdichtflächenbereiche (40) zum abdichtenden Anliegen gegen die Maschinenbauteile aufweist, und wobei mindestens die Außenlagen durch Vernieten mittels wenigstens eines Niets (24) aneinander fixiert sind und der Niet in einem Bereich der Dichtungsplatte (16) angeordnet ist, in dem die Außenseiten der Außenlagen (18, 20) einen um so viel geringeren Abstand voneinander aufweisen als in diesem Bereich benachbarten, Abdichtflächenbereiche (40) bildenden Nachbarbereichen der Dichtungsplatte, daß der Niet nicht über das Niveau der Abdichtflächenbereiche dieser Nachbarbereiche übersteht, **dadurch gekennzeichnet, daß** der Niet (24) an einer solchen Stelle der Dichtungsplatte (16) angeordnet ist, welche bei eingebauter Dichtung zwischen öffnungs- und vertiefungslosen Bereichen der Maschinenbauteil-Dichtflächen (10a, 12a) liegt.

2. Flachdichtung nach Anspruch 1, **dadurch gekennzeichnet, daß** die Zwischenlage (22) oder mindestens eine der Zwischenlagen in dem den Niet (24) aufnehmenden Dichtungsplattenbereich eine eine örtliche Annäherung der Außenlagen aneinander ermöglichende Aussparung (22a) aufweist.

3. Flachdichtung nach Anspruch 2, **dadurch gekennzeichnet, daß** die Aussparung von einem öffnungsartigen Ausschnitt (22a) der Zwischenlage (22) gebildet wird.

4. Flachdichtung nach einem oder mehreren der vorstehenden Ansprüche, **dadurch gekennzeichnet, daß** in dem den Niet (24) aufnehmenden Dichtungsplattenbereich die Außenlagen (28, 20) unmittelbar gegeneinander anliegen.

5. Flachdichtung nach einem oder mehreren der vorstehenden Ansprüche, **dadurch gekennzeichnet, daß** der Niet (24) als insbesondere ösenartiger Hohlniet ausgebildet ist.

6. Flachdichtung nach einem oder mehreren der vorstehenden Ansprüche, **dadurch gekennzeichnet, daß** die Außenlagen (18, 20) in den genannten Nachbarbereichen wenigstens an einer Hauptoberfläche der Dichtungsplatte mit mindestens einem Dichtelement (30) versehen sind, welches den den Niet (24) aufnehmenden Dichtungsplattenbereich umschließt.

7. Flachdichtung nach Anspruch 6, **dadurch gekennzeichnet, daß** die Außenlagen (18, 20) an jeder der beiden Hauptoberflächen der Dichtungsplatte (16) mit mindestens einem solchen Dichtelement (30) versehen sind.

8. Flachdichtung nach Anspruch 6 oder 7, **dadurch gekennzeichnet, daß** das Dichtelement (30) als in einer Außenlage (18, 20) ausgebildete Sicke gestaltet ist.

9. Flachdichtung nach Anspruch 8, **dadurch gekennzeichnet, daß** die Sicke (30) eine im Querschnitt ungefähr stufenförmige Halbsicke ist.

10. Flachdichtung nach Anspruch 9, **dadurch gekennzeichnet, daß** bei nicht eingebauter Dichtung die Außenlagen (18, 20) bezüglich des Niets (24) radial außerhalb der Halbsicke (30) einen Abstand von der Zwischenlage (22) aufweisen.

11. Flachdichtung nach einem oder mehreren der vorstehenden Ansprüche, **dadurch gekennzeichnet, daß** die Außenlagen (18, 20) aus Federstahlblech bestehen.

12. Flachdichtung nach einem oder mehreren der vorstehenden Ansprüche, **dadurch gekennzeichnet, daß** die Zwischenlage (22) eine Metallage ist.

13. Flachdichtung nach einem oder mehreren der vorstehenden Ansprüche, **dadurch gekennzeichnet, daß** alle Lagen (18, 20, 22) der Dichtungsplatte (16) von Metallagen gebildet werden.

14. Flachdichtung nach einem oder mehreren der vorstehenden Ansprüche, **dadurch gekennzeichnet, daß** die Dichtung (14) so gestaltet ist, daß mindestens bei eingebauter Dichtung die den Niet (24) umschließenden Bereiche der Zwischenlage (22) zwischen den Außenlagen (18, 20) gepreßt sind.

15. Flachdichtung nach einem oder mehreren der vorstehenden Ansprüche, **dadurch gekennzeichnet, daß** der Niet (24) von zum abdichtenden Anliegen gegen Dichtflächen (10a, 12a) der Maschinenbauteile (10, 12) vorgesehenen Abdichtflächenbereichen (40) der Dichtungsplatte (16) umschlossen ist.

16. Flachdichtung nach einem oder mehreren der vorstehenden Ansprüche, **dadurch gekennzeichnet, daß** jede der Außenlagen (18, 20) mit einer den Niet (24) aufnehmenden Vertiefung versehen ist, wobei die beiden Vertiefungen den Niet vollständig aufnehmen.

## Claims

1. Cylinder head gasket for clamping between sealing surfaces (10a, 12a) of two machine components in the form of an engine block (12) and a cylinder head (10), said sealing surfaces having areas that have no openings or recesses, and said cylinder head gasket comprising a multilayer gasket plate (16) comprising between metallic outer layers (18, 20) at least one intermediate layer (22) and at both of its main surfaces sealing surface areas (40) for sealing abutment against the machine components, and at least said outer layers being joined to one another by riveting by means of at least one rivet (24), and said rivet being disposed in an area of the gasket plate (16) in which the outer sides of the outer layers (18, 20) are at such a smaller distance from one another than in neighbouring areas of the gasket plate neighbouring on this area and forming sealing surface areas (40) that the rivet does not protrude over the level of the sealing surface areas of these neighbouring areas, **characterized in that** the rivet (24) is disposed at a location on the gasket plate (16) that lies between areas of the machine component sealing surfaces (10a, 12a) without any openings or recesses when the gasket is installed.

2. Flat gasket in accordance with Claim 1, **characterized in that** the intermediate layer (22) or at least one of the intermediate layers comprises in the gasket plate area receiving the rivet (24) a recess (22a) which makes it possible for the outer layers to locally approach one another.

3. Flat gasket in accordance with Claim 2, **characterized in that** the recess is formed by a window-like cut-out (22a) of the intermediate layer (22).

4. Flat gasket in accordance with any one or several of the preceding claims, **characterized in that** the outer layers (18, 20) lie directly against one another in the gasket plate area that receives the rivet (24).

5. Flat gasket in accordance with any one or several of the preceding claims, **characterized in that** the rivet (24) is designed as a hollow rivet, in particular, an eyelet-type hollow rivet.

6. Flat gasket in accordance with any one or several of the preceding claims, **characterized in that** the outer layers (18, 20) in the aforesaid neighbouring areas are provided on at least one main surface of the gasket plate with at least one sealing element (30) which encloses the gasket plate area receiving the rivet (24).

7. Flat gasket in accordance with Claim 6, **characterized in that** the outer layers (18, 20) are provided with at least one such sealing element (30) on each of the two main surfaces of the gasket plate (16).

8. Flat gasket in accordance with Claim 6 or 7, **characterized in that** the sealing element (30) is designed as a bead formed in an outer layer (18, 20).

9. Flat gasket in accordance with Claim 8, **characterized in that** the bead (30) is a half bead of approximately step-shaped cross section.

10. Flat gasket in accordance with Claim 9, **characterized in that** the outer layers (18, 20) are spaced from the intermediate layer (22) radially outwardly of the half bead (30) with respect to the rivet (24) when the gasket is not installed.

11. Flat gasket in accordance with any one or several of the preceding claims, **characterized in that** the outer layers (18, 20) consist of sheet spring steel.

12. Flat gasket in accordance with any one or several of the preceding claims, **characterized in that** the intermediate layer (22) is a metal layer.

13. Flat gasket in accordance with any one or several of the preceding claims, **characterized in that** all layers (18, 20, 22) of the gasket plate (16) are formed by metal layers.

14. Flat gasket in accordance with any one or several of the preceding claims, **characterized in that** the gasket (14) is designed such that the areas of the intermediate layer (22) enclosing the rivet (24) are pressed between the outer layers (18, 20) at least when the gasket is installed.

15. Flat gasket in accordance with any one or several of the preceding claims, **characterized in that** the rivet (24) is enclosed by sealing surface areas (40) of the gasket plate (16) which are provided for sealing abutment against sealing surfaces (10a, 12a) of the machine components (10, 12).

16. Flat gasket in accordance with any one or several of the preceding claims, **characterized in that** each of the outer layers (18, 20) is provided with a recess receiving the rivet (24), with both recesses receiving the rivet completely.

## Revendications

1. Joint de culasse destiné à être serré entre des surfaces d'étanchement (10a, 12a) de deux composants de machine sous la forme d'un bloc moteur (12) et d'une culasse (10), lesdites surfaces d'étanchement comportant des zones dépourvues d'ouvertures et dépourvues de renfoncements, et le joint de culasse comportant une plaque d'étanchement (16) à plusieurs couches, ladite plaque comportant entre des couches extérieures métalliques (18, 20) au moins une couche intermédiaire (22) ainsi que des zones de surfaces d'étanchement (40) sur ses deux surfaces principales destinées à venir en appui étanche contre les composants de machine, et les couches extérieures au moins sont fixées l'une à l'autre par rivetage au moyen d'un rivet (24) au moins, et le rivet est agencé dans une zone de la plaque d'étanchement (16) dans laquelle les faces extérieures des couches extérieures (18, 20) présentent l'une par rapport à l'autre un écartement d'autant plus faible par rapport aux zones voisines de la plaque d'étanchement qui forment des zones de surfaces d'étanchement (40) voisines, que le rivet ne dépasse pas au-delà du niveau des zones de surfaces d'étanchement de ces zones voisines, **caractérisé en ce que** le rivet (24) est agencé à un emplacement tel de la plaque d'étanchement (16) que celui-ci se trouve, lorsque le joint est monté, entre les zones dépourvues d'ouvertures et dépourvues de renfoncements des surfaces d'étanchement (10a, 12a) des composants de machine.

2. Joint selon la revendication 1, **caractérisé en ce que** la couche intermédiaire (22), ou au moins l'une des couches intermédiaires présente, dans la zone de plaque d'étanchement qui reçoit le rivet (24), un évidement (22a) permettant un rapprochement localisé des couches extérieures l'une vers l'autre.

3. Joint selon la revendication 2, **caractérisé en ce que** l'évidement est formé par une découpe en forme d'ouverture (22a) de la couche intermédiaire (22).

4. Joint selon l'une ou plusieurs des revendications précédentes, **caractérisé en ce que**, dans la zone de la plaque d'étanchement qui reçoit le rivet (24), les couches extérieures (28, 20) sont disposées immédiatement l'une contre l'autre.

5. Joint selon l'une ou plusieurs des revendications précédentes, **caractérisé en ce que** le rivet (24) est réalisé en particulier sous forme de rivet creux en forme d'oeillet.

6. Joint selon l'une ou plusieurs des revendications précédentes, **caractérisé en ce que** les couches extérieures (18, 20) sont dotées dans les zones voisines précitées et au moins au niveau d'une surface principale de la plaque d'étanchement, d'au moins un élément d'étanchement (30) qui entoure la zone de plaque d'étanchement qui reçoit le rivet (24).

7. Joint selon la revendication 6, **caractérisé en ce que** les couches extérieures (18, 20) sont pourvues, au niveau de chacune des deux surfaces principales de la plaque d'étanchement (16), d'au moins un élément d'étanchement (30).

8. Joint selon l'une ou l'autre des revendications 76 et 7, **caractérisé en ce que** l'élément d'étanchement (30) est réalisé sous la forme d'une moulure ménagée dans une couche extérieure (18, 20).

9. Joint selon la revendication 8, **caractérisé en ce que** la moulure (30) est une demi-moulure ayant en coupe transversale une section approximativement en gradin.

10. Joint selon la revendication 9, **caractérisé en ce que**, lorsque le joint n'est pas monté, les couches extérieures (18, 20) présentent par rapport au rivet (24) et radialement à l'extérieur de la demi-moulure (30), un écartement par rapport à la couche intermédiaire (22).

11. Joint selon l'une ou plusieurs des revendications précédentes, **caractérisé en ce que** les couches extérieures (18, 20) sont réalisées en tôle d'acier ressort.

12. Joint selon l'une ou plusieurs des revendications précédentes, **caractérisé en ce que** la couche intermédiaire (22) est une couche métallique.

13. Joint selon l'une ou plusieurs des revendications précédentes, **caractérisé en ce que** toutes les couches (18, 20, 22) de la plaque d'étanchement (16) sont constituées par des couches métalliques.

14. Joint selon l'une ou plusieurs des revendications précédentes, **caractérisé en ce que** le joint (14) est ainsi conçu que, au moins lorsque le joint est monté, les zones de la couche intermédiaire (22) qui entourent le rivet (24) sont pressées entre les couches extérieures (18, 20).

15. Joint selon l'une ou plusieurs des revendications précédentes, **caractérisé en ce que** le rivet (24) est enfermé par les zones de surface d'étanchement (40) de la plaque étanchement (16) qui sont prévues pour venir s'appliquer de façon étanche contre des surfaces d'étanchement (10a, 12a) des composants de machine (10, 12).

16. Joint selon l'une ou plusieurs des revendications précédentes, **caractérisé en ce que** chacune des couches extérieures (18, 20) est pourvue d'un renfoncement qui reçoit le rivet (24), et **en ce que** les deux renfoncements reçoivent entièrement le rivet.
